(19) Europäisches Patentamt
European Patent Office
Office européen des brevets

(11) EP 4 052 780 A1

(12) **EUROPEAN PATENT APPLICATION**
published in accordance with Art. 153(4) EPC

(43) Date of publication:
07.09.2022  Bulletin 2022/36

(51) International Patent Classification (IPC):
*B01D 63/00* (2006.01)    *B01D 63/02* (2006.01)
*B01D 69/08* (2006.01)    *B01D 71/56* (2006.01)
*C09J 201/00* (2006.01)

(21) Application number: 20880655.4

(22) Date of filing: 02.10.2020

(52) Cooperative Patent Classification (CPC):
**B01D 63/00; B01D 63/02; B01D 69/08;
B01D 71/56; C09J 201/00**

(86) International application number:
**PCT/JP2020/037652**

(87) International publication number:
**WO 2021/085037 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 31.10.2019  JP 2019198181

(71) Applicant: **Unitika Ltd.**
**Amagasaki-shi, Hyogo 660-0824 (JP)**

(72) Inventor: **INOUE, Kuniko**
**Uji-shi, Kyoto 611-0021 (JP)**

(74) Representative: **Müller-Boré & Partner
Patentanwälte PartG mbB
Friedenheimer Brücke 21
80639 München (DE)**

(54)    **FILTER MODULE CASE**

(57)    The filter module case includes a casing, a cap, a first layer, and a second layer. The casing has a substantially cylindrical shape that extends in an axial direction. The cap has a substantially cylindrical shape and includes an inner wall surface that defines a passage providing communication between the inside and the outside of the casing and extending in the axial direction and a first end portion that receives an end portion of the casing in the passage and is bonded and fixed to the end portion of the casing. The first layer is arranged at a position closer to an end in the axial direction and faces an outer peripheral surface of the end portion of the casing and the inner wall surface of the first end portion. The second layer is arranged at a position closer to the center in the axial direction than the first layer is and faces the outer peripheral surface of the end portion of the casing and the inner wall surface of the first end portion. The casing and the cap are made of a material with organic solvent resistance. The first layer is formed of a first adhesive with organic solvent resistance, and the second layer is formed of a second adhesive that has an affinity for hard-to-adhere materials and has a higher elasticity than the first adhesive.

Fig.1

**Description**

Technical Field

The present invention relates to a filter module case.

Background Art

Patent Literature 1 discloses a hollow fiber membrane module. In this hollow fiber membrane module, caps with an opening are attached to both ends of a cylindrical housing case, and a bundle of hollow fiber membranes with their end portions being potted is housed inside the housing case. The hollow fiber membrane module further includes fixing members for fixing the bundle of hollow fiber membranes inside the housing case. The fixing members are annular members made of a metal or glass. The fixing members are arranged in the housing case so as to bundle up the hollow fiber membranes at the potted portions with the inner peripheral portion of the fixing members abutting against the outer peripheral portion of the bundle of hollow fiber membranes.

Citation List

Patent Literature

Patent Literature 1: JP 2009-202112A

Summary of Invention

Technical Problem

In the hollow fiber membrane module of Patent Literature 1, the potted portions are bonded and fixed by the fixing members. Accordingly, even though the housing case is made of a resin, the adhesion strength at the potted portions can be enhanced. However, since the use of the fixing members increases the number of components of the module, there is demand for a filter module with a simpler configuration.

It is an object of the present invention to provide a filter module case with high durability and a simple configuration.

Solution to Problem

A filter module case according to a first aspect of the present invention includes a casing, a cap, a first layer, and a second layer. The casing has a substantially cylindrical shape that extends in an axial direction. The cap has a substantially cylindrical shape and includes an inner wall surface that defines a passage providing communication between an inside and an outside of the casing and extending in an axial direction and a first end portion that receives an end portion of the casing in the passage and is bonded and fixed to the end portion of the casing. The first layer is arranged at a position closer to an end in the axial direction and faces an outer peripheral surface of the end portion of the casing and the inner wall surface of the first end portion. The second layer is arranged at a position closer to the center in the axial direction than the first layer is and faces the outer peripheral surface of the end portion of the casing and the inner wall surface of the first end portion. The casing and the cap are made of a material with organic solvent resistance. The first layer is formed of a first adhesive with organic solvent resistance, and the second layer is formed of a second adhesive that has an affinity for hard-to-adhere materials and has a higher elasticity than the first adhesive.

According to this configuration, the second layer formed of the second adhesive is separated from a fluid containing an organic solvent by the first layer formed of the first adhesive with organic solvent resistance. Since the second adhesive has an affinity for hard-to-adhere materials, the second adhesive can reliably bond the casing and the cap made of the material with organic solvent resistance. Thus, the adhesion strength of the first adhesive is reinforced by the second adhesive. Further, since the second adhesive is elastic, the load applied to the filter module case by the pressure of a fluid can be absorbed by the elasticity of the second adhesive, whereby sealing between the casing and the cap can be maintained.

A filter module case according to a second aspect of the present invention includes a casing, a cap, a first layer, and a second layer. The casing has a substantially cylindrical shape that extends in an axial direction. The cap has a substantially cylindrical shape and includes an inner wall surface that defines a passage that provides communication between an inside and an outside of the casing and extending in the axial direction and a first end portion that is received by an end portion of the casing and is bonded and fixed to the end portion of the casing. The first layer that is arranged at a position closer to the center in the axial direction and faces an inner peripheral surface of the end portion of the casing and an outer peripheral surface of the first end portion. The second layer is arranged at a position closer to an end in the axial direction than the first layer is and faces the inner peripheral surface of the end portion of the casing and the outer peripheral surface of the first end portion. The casing and the cap are made of a material with organic solvent resistance. The first layer is formed of a first adhesive with organic solvent resistance. The second layer is formed of a second adhesive that has an affinity for hard-to-adhere materials and has a higher elasticity than the first adhesive.

According to this configuration, the second layer formed of the second adhesive is separated from a fluid containing an organic solvent by the first layer formed of the first adhesive with organic solvent resistance. Since the second adhesive has an affinity for hard-to-adhere materials, the second adhesive can reliably bond the casing and the cap made of the material with organic solvent resistance. Thus, the adhesion strength of the first adhesive is reinforced by the second adhesive. Further, since the second adhesive is elastic, the load applied to the filter module case by the pressure of a fluid can be absorbed by the elasticity of the second adhesive, whereby sealing between the casing and the cap can be maintained.

A filter module case according to a third aspect of the present invention is the filter module case according to the first or second aspect, in which the material of the casing and the cap includes a material selected from the group consisting of polyamide, polyethylene, polypropylene, polyetheretherketone, polyphenylsulfone, polyphenylene sulfide, polytetrafluoroethylene, ethylene chlorotrifluoroethylene, and metals.

According to this configuration, a filter module case is provided that can be produced at a relatively low cost and can be handled easily.

A filter module case according to a fourth aspect of the present invention is the filter module case according to any one of the first to third aspects, in which the casing has a degree of transparency high enough to allow an interior of the casing to be visible from outside.

According to this configuration, the interior of a filter module that uses this case can be checked easily. Thus, clogging of a fluid, breakage of a filter, and the like can be found easily, and the location of such a trouble can be identified easily.

A filter module case according to a fifth aspect of the present invention is the filter module case according to any one of the first to fourth aspects, in which the first adhesive includes a material selected from the group consisting of polyamide adhesives, polyethylene adhesives, polypropylene adhesives, phenol resin adhesives, polyimide adhesives, polyurea resin adhesives, epoxy resin adhesives, and silicone resin adhesives.

A filter module case according to a sixth aspect of the present invention is the filter module case according to any one of the first to fifth aspects, in which the second adhesive is selected from the group consisting of silicone adhesives, modified silicone adhesives, acrylic modified silicone adhesives, urethane adhesives, vinyl acetate adhesives, epoxy modified silicone adhesives, and styrene butadiene rubber adhesives.

A filter module according to a seventh aspect of the present invention is a filter module including: the filter module case according to any one of the first to sixth aspects; and a filter housed in an internal space of the casing and a space that is defined by the inner wall surface of the cap, in which the filter is made of a material with organic solvent resistance.

A filter module according to an eighth aspect of the present invention is the filter module according to the seventh aspect, in which the filter is a hollow fiber membrane bundle housed in the space with a longitudinal direction of the hollow fiber membrane bundle aligned with the axial direction of the casing, the cap further includes a second end portion that is on an opposite side of the first end portion across the passage extending in the axial direction, the second end portion defines an end opening of the passage, and a through-hole extending in the longitudinal direction in each of hollow fiber membranes constituting the hollow fiber membrane bundle is in communication with an external space via the end opening.

A filter module according to a ninth aspect of the present invention is the filter module according to the eighth aspect, further including a potting agent and a third layer. The potting agent fills a gap between end portions of the respective hollow fiber membranes and the inner wall surface of the second end portion and fixes the hollow fiber membrane bundle to the cap in such a manner that an end face of the hollow fiber membrane bundle is generally aligned with an end face of the second end portion. The third layer is arranged between the potting agent and the inner wall surface of the second end portion. The potting agent has organic solvent resistance. The third layer is formed of a third adhesive that has an affinity for hard-to-adhere materials and has a higher elasticity than the potting agent.

According to this configuration, the respective hollow fiber membranes are positioned with respect to the filter module case, and a fluid before being subjected to separation and a fluid after being subjected to separation can be separated from each other in the longitudinal direction and the radial direction of the hollow fiber membrane bundle. Further, the load applied by the pressure of a fluid can be absorbed by the elastic third adhesive, whereby adhesion between the potting agent and the inner wall surface of the cap can be improved.

A filter module according to a tenth aspect of the present invention is the filter module according to the nineth aspect, in which a portion of the inner wall surface of the second end portion to abut against the potting agent is made uneven.

According to this configuration, the contact area between the inner wall surface of the cap and the potting agent increases, whereby the fixation by the potting agent can be improved.

A filter module according to an eleventh aspect of the present invention is the filter module according to ninth or tenth aspect, in which the potting agent includes a material selected from the group consisting of polyamide, polyethylene, polypropylene, phenolic resins, polyimide, polyurea resins, epoxy resins, and silicone resins.

A filter module according to a twelfth aspect of the present invention is the filter module according to any one of the ninth to eleventh aspects, in which the third adhesive is selected from the group consisting of silicone adhesives, modified silicone adhesives, acrylic modified silicone adhesives, urethane adhesives, vinyl acetate adhesives, epoxy modified silicone adhesives, and styrene butadiene rubber adhesives.

A filter module according to a thirteenth aspect of the present invention is the filter module according to any one of the eighth to twelfth aspects, in which the hollow fiber membranes are made of polyamide.

According to this configuration, it is possible to provide a filter module that is inexpensive and has organic solvent resistance.

Advantageous Effects of Invention

The first aspect of the present invention provides a filter module case that has organic solvent resistance and high durability. The second aspect of the present invention can also exhibit similar effects.

Brief Description of Drawings

FIG. 1 is a plan view of a filter module according to an embodiment.
FIG. 2 is a fragmentary sectional view of a filter module case according to the embodiment.
FIG. 3 is an end view of the filter module according to the embodiment.
FIG. 4 is a fragmentary sectional view of the filter module according to the embodiment.
FIG. 5 is a flowchart illustrating the flow of a method for producing the filter module according to the embodiment.
FIG. 6 is a schematic diagram illustrating how adhesives are applied in the embodiment.
FIG. 7 is a schematic diagram showing a potting device according to the embodiment.
FIG. 8 is a fragmentary sectional view of a filter module case according to a modified example.
FIG. 9A is a fragmentary sectional view illustrating a bonding method of a filter module case according to Comparative Example 1.
FIG. 9B is a fragmentary sectional view illustrating a bonding method of a filter module case according to Comparative Example 2.
FIG. 10 is a schematic diagram illustrating a separation treatment line for experiments.

Description of Embodiments

An embodiment of the filter module according to the present invention will be described below with reference to the drawings.

1. Filter Module Case

Filter modules are used in a wide variety of applications including, for example, removal of bacteria from water, food processing, production of medical water, wastewater treatment, separation of mixed gases, deaeration of solutions, and production and treatment of solutions. The filter module 1 according to the present embodiment (may also be referred to simply as "module 1" hereinafter) can be used suitably for, in particular, treatment of solutions containing an organic solvent. The module 1 can be used in a state of being connected to a separation treatment line in such a manner that a fluid can pass through the interior of the module 1.

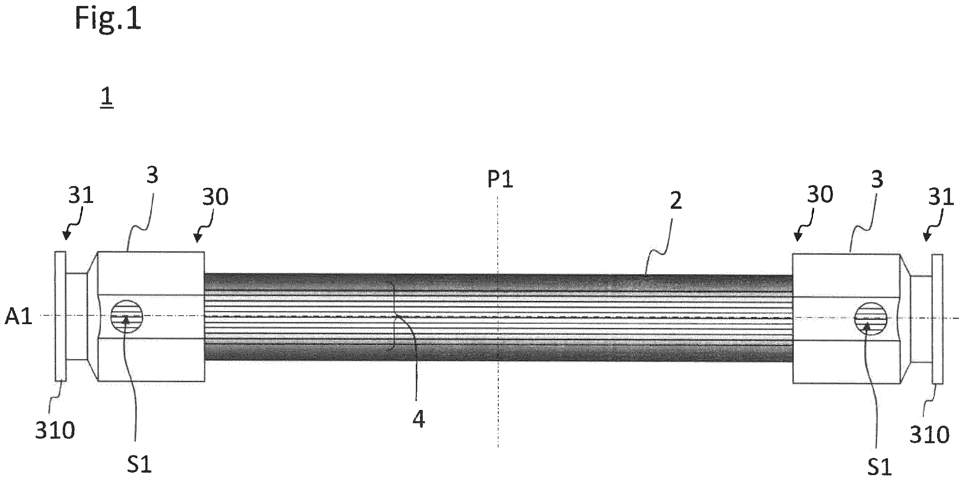

FIG. 1 is a plan view of the module 1 of the present embodiment. The module 1 has a substantially cylindrical external shape as a whole and is configured to be symmetric with respect to a plane P1 (see FIG. 1) that passes through the center of the module 1.

The module 1 includes a casing 2, caps 3, and a filter 4. The casing 2, the caps 3, and the filter 4 are each made of a material with organic solvent resistance. The casing 2 and the caps 3 are bonded and fixed together as described below, thereby constituting a filter module case for housing the filter 4 therein (may also be referred to simply as "module case" hereinafter). The filter 4 of the present embodiment is made up of a large number of hollow fiber membranes bundled up together to form a hollow fiber membrane bundle. Hereafter, the hollow fiber membrane bundle is also given the same reference numeral as the filter 4.

The casing 2 of the present embodiment has a cylindrical exterior shape that is open at both ends, and has a central axis A1. The direction in which the central axis A1 extends (the left-right direction in FIG. 1) is hereinafter referred to as the axial direction. The length in the axial direction, diameter, and thickness of the casing 2 can be selected as appropriate according to the type of a filter to be housed in the module case, the pressure of a fluid, and the like.

The material of the casing 2 may include a material selected from the group consisting of polyamide (PA), polyethylene (PE), polypropylene (PP), polyetheretherketone (PEEK), polyphenylsulfone (PPSU), polyphenylene sulfide (PPSP), polytetrafluoroethylene (PTFE), ethylene chlorotrifluoroethylene (ECTFE), and metals. One of these materials may be used alone, or two or more of them may be used in combination. Of the above-listed materials, the resin materials may be either uncrosslinked or crosslinked, and the uncrosslinked resin materials are advantageous in terms of cost. A filler made of an inorganic material may be added to the above-described resin materials, when necessary. The material of the casing 2 preferably exhibits a weight change ratio of 10 mass% or less when subjected to propylene glycol monomethyl ether acetate (PGMEA), and more preferably exhibits a weight change ratio of 10 mass% or less when subjected to PGMEA and also when subjected to toluene. In the present invention, the weight change ratio of the material when subjected to PGMEA and the weight change ratio of the material when subjected to toluene are measured in the following manners, respectively.

Method of measuring weight change ratio when subjected to PGMEA

The material is continuously immersed in PGMEA at 20°C for 30 days to measure the wight change ratio.

Method of measuring weight change ratio when subjected to toluene

The material is continuously immersed in toluene at 20°C for 30 days to measure the wight change ratio.

The casing 2 of the present embodiment is made of polyamide 6 (monomer-cast nylon) and has the degree of transparency high enough to allow the interior of the casing to be visible. FIG. 1 illustrates a state where the hollow fiber membrane bundle 4 housed in the internal space of the module case is visible from the outside of the casing 2. As an index of the degree of transparency, the casing 2 may have, for example, a total light transmittance of 60% or more and preferably 70% or more. In the present invention, the total light transmission is measured in a manner that complies with JIS K7361-1.

The caps 3 are members to be attached to both end portions of the casing 2 to enable installation of the module 1 in a solution treatment line. Since the two caps 3 of the module 1 of the present embodiment have the same configuration, the following description on the caps will be made with reference to only one of them.

The cap 3 of the present embodiment has a substantially cylindrical exterior shape, and is fixed to the casing 2 with its central axis aligned with the central axis A1 of the casing 2. The cap 3 has a first end portion 30 and a second end portion 31. The first end portion 30 is a portion to be fixed to the end portion of the casing 2. The second end portion 31 is an end portion that is on the opposite side of the first end portion 30 across a passage S2 to be described below. The second end portion 31 of the present embodiment has a flange portion 310 formed in a flange shape so as to be connectable as a ferrule to piping of a separation treatment line.

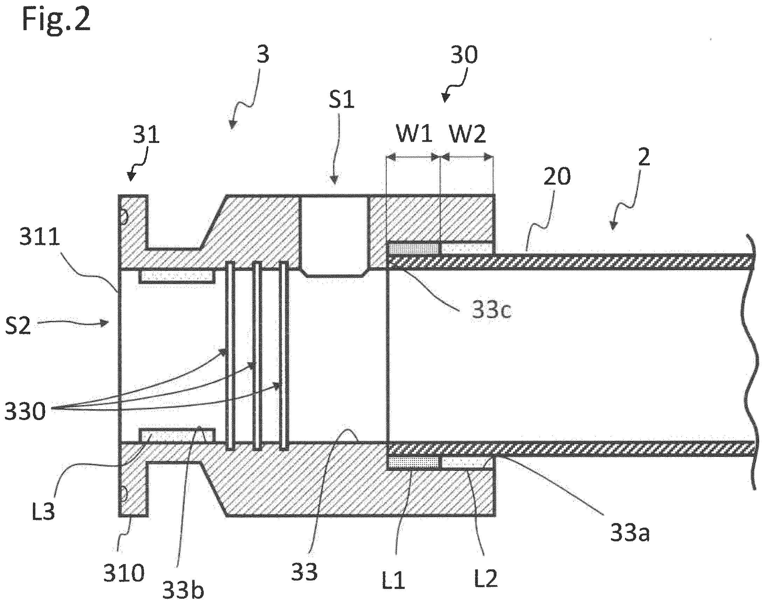

FIG. 2 is a cross-sectional view of a region near an end portion of the module case. As shown in FIG. 2, the cap 3 has an inner wall surface 33. The inner wall surface 33 defines a passage S1 that extends in the radial direction and a passage S2 that extends in the axial direction. As shown in FIG. 1, in the state where the hollow fiber membrane bundle 4 is housed in the module case, the hollow fiber membrane bundle 4 can be directly seen from the passage S1. Further, as shown in FIG. 2, an end opening of the passage S2 is defined by a peripheral edge 311 of an end face of the second end portion 31.

The passages S1 and S2 are both passages for providing communication between the internal space of the casing 2 (or the module case) and the external space, and they function as a primary side port and a secondary side port of the module 1. The primary side port is a port into which a fluid before being subjected to separation flows, and the secondary side port is a port from which the fluid after being subjected to separation flows out. Depending on the desired mode of separation, the module 1 may have one secondary side port or may have two or more secondary side ports, and the passages S1 and S2 both can be used as either the primary side port or the secondary side port. In the present embodiment, the passage S2 on one side is used as the primary side port. That is, in the present embodiment, the passage S2 on the other side and the two passages S1 are used as the secondary side ports. In normal use of the module 1, one of the two passages S1 may be closed without being used as the secondary side port. In the present embodiment, the fluid that has flowed from the passage S2 serving as the primary side port and then has passed through pores of the hollow fiber membrane bundle 4 to be described below flows out from the passages S1 serving as the secondary side ports. The remaining fluid passes through hollow portions (through-holes) of the hollow fiber membrane bundle 4 and then flows out from the other passage S2 serving as the secondary side port.

The inner wall surface 33 of the present embodiment has an inner peripheral surface 33a and an inner peripheral surface 33b having a smaller diameter than the inner peripheral surface 33a. The inner peripheral surface 33a is a peripheral surface located on the inner side of the first end portion 30. The inner diameter of the cap 3 in the first end portion 30 is the same as or slightly larger than the outer diameter of the casing 2. With this configuration, the inner peripheral surface 33a receives the end portion of the casing 2 and covers an outer peripheral surface 20 of the casing 2 from the outer side in the radial direction. The inner diameter of a portion of the cap 3 excluding the first end portion 30 is approximately the same as the inner diameter of the casing 2. With this configuration, when the cap 3 receives the end portion of the casing 2, the inner wall surface of the casing 2 is approximately flush with the inner peripheral surface 33b. A surface 33c with which the inner peripheral surfaces 33a and 33b are continuous is a surface orthogonal to the axial direction, and when the casing 2 is received, the end face of the casing 2 abuts against the surface 33c.

The cap 3 of the present embodiment is further provided with three grooves 330 formed on the inner peripheral surface 33b. The grooves 330 are formed on the inner peripheral surface 33b at a position closer to the center in the axial direction than the end face of the second end portion 31 is and closer to the end in the axial direction than the passage S1 is. The purpose of forming the grooves 330 is to make the surface of the inner peripheral surface 33b substantially uneven to increase the surface area of the inner peripheral surface 33b, thereby enabling reinforced adhesion between a potting agent 5 to be described below and the inner peripheral surface 33b. The method of increasing the surface area as described above is not limited to providing the grooves 330, and may be a surface roughening treatment such as roughing the inner peripheral surface 33b through etching, sand-blasting, or cutting.

The material of the cap 3 may include a material selected from the group consisting of polyamide (PA), polyethylene (PE), polypropylene (PP), polyetheretherketone (PEEK), polyphenylsulfone (PPSU), polyphenylene sulfide (PPSP), polytetrafluoroethylene (PTFE), ethylene chlorotrifluoroethylene (ECTFE), and metals. One of these materials may be used alone, or two or more of them may be used in combination. Of the above-listed materials, the resin materials may be either uncrosslinked or crosslinked, and the uncrosslinked resin materials are advantageous in terms of cost. A filler made of an inorganic material may be added to the above-described resin materials, when necessary. The material of the cap 3 preferably exhibits a weight change ratio of 10 mass% or less when subjected to propylene glycol monomethyl ether acetate (PGMEA) and more preferably exhibits a weight change ratio of 10 mass% or less when subjected to PGMEA and also when subjected to toluene, as with the material of the casing 2.

The cap 3 of the present embodiment is made of polyamide 6, which is the same as the material of the casing 2. However, the material of the cap 3 need only be a material with organic solvent resistance and may be different from the material of the casing 2. The wall thickness of the cap 3 may be different from or the same as the wall thickness of the casing 2.

In the module case of the present embodiment, the outer peripheral surface 20 of the casing 2 and the inner peripheral surface 33a of the first end portion 30 face each other. Between the outer peripheral surface 20 and the inner peripheral surface 33a, a first layer L1 formed of a first adhesive and a second layer L2 formed of a second adhesive are arranged. The first layer L1 is a layer located closer to the end in the axial direction. In the present embodiment, the first layer L1 is formed in an annular shape extending from the edge of the casing 2 with a predetermined width W1 in the axial direction. The second layer L2 is a layer that is located closer to the center in the axial direction than the first layer L1 is and is adjacent to the first layer L1. The second layer L2 is formed in an annular shape with a predetermined width W2 in the axial direction. The first layer L1 and the second layer L2 may be arranged so as to partially overlap each other. Note here that, for the sake of convenience in illustration, the thickness of the first layer L1 and the thickness of the second layer L2 in the radial direction are exaggerated in the drawings, and they are not necessarily to scale.

The first adhesive bonds and fixes the casing 2 and the cap 3 together, and also seals a gap between the casing 2 and the cap 3. Since the first adhesive has organic solvent resistance, it can be suitably used to provide sealing against fluids containing an organic solvent. However, in many cases, adhesives with organic solvent resistance have relatively high hardness. Also, organic solvent resistant materials that can be used for the casing 2 and the cap 3 are often hard-to-adhere materials. Accordingly, it is considered that the first layer L1 may come off when subjected to the load caused by the pressure of a fluid passing through the module 1. To address this issue, the sealing provided by the first adhesive is reinforced by the second adhesive.

The second adhesive has an affinity for hard-to-adhere materials and has a higher elasticity than the first adhesive. That is, the second adhesive is suitably used as a material for bonding the casing 2 and the cap 3 both made of a hard-to-adhere material. Further, since the second adhesive has a higher elasticity than the first adhesive, it absorbs the load applied to the module 1 by the pressure of a fluid and the like, whereby sealing between the casing 2 and the cap 3 is maintained.

The first adhesive is made of a material with organic solvent resistance. The material of the first adhesive may be, for example, a material selected from the group consisting of polyamide adhesives, polyethylene adhesives, polypropylene adhesives, phenol resin adhesives, polyimide adhesives, polyurea resin adhesives, epoxy resin adhesives, and silicone resin adhesives. Preferably, the material of the first adhesive is a material selected from the group consisting of polyamide adhesives, polyethylene adhesives, and epoxy resin adhesives. One of these materials may be used alone, or two or more of them may be used in combination.

The first adhesive of the present embodiment is an epoxy resin adhesive that uses a known epoxy resin as a main component and is liquid at ordinary temperature. More specific examples of the main component of the first adhesive include: glycidyl ether epoxy resins such as bisphenol A diglycidyl ether, bisphenol F diglycidyl ether, resorcinol diglycidyl ether, triglycidyl ether triphenylmethane, and tetraglycidyl ether tetraphenylethane; and glycidyl ester epoxy resins such as phthalic acid diglycidyl ester and dimer acid diglycidyl ester.

A curing agent of the first adhesive of the present embodiment may be any known curing agent as long as it has organic solvent resistance, and preferably is one that is liquid at ordinary temperature. Examples of the curing agent include amine curing agents such as aromatic amines, aliphatic polyamines, and alicyclic amines, and acid anhydrides. More specific examples of the aromatic amines include diaminodiphenylmethane, m-phenylenediamine, and diaminodiphenylsulfone. More specific examples of the aliphatic polyamines include diethylenetriamine, triethylenetetramine, and meta-xylenediamine. More specific examples of the alicyclic amines include 1,3-bisaminomethylcyclohexane. Two or more of the above-listed amines may be used in combination. More specific examples of the acid anhydrides include tetrahydrophthalic anhydride and hexahydrophthalic anhydride. In the present embodiment, an aromatic polyamine is used as the curing agent of the first adhesive.

The hardness of the first adhesive after curing may be A90 or more and preferably D70 or more in terms of durometer hardness as specified in JIS K 6253-3: 2012. The first adhesive preferably exhibits a weight change ratio of 10 mass% or less when subjected to propylene glycol monomethyl ether acetate (PGMEA) and more preferably exhibits a weight change ratio of 10 mass% or less when subjected to PGMEA and also when subjected to toluene, as with the material of the casing 2.

The second adhesive has an affinity for hard-to-adhere materials and has a higher elasticity than the first adhesive. As the second adhesive, known elastic adhesives for hard-to-adhere materials can be used. Specific examples thereof include silicone adhesives, modified silicone adhesives, acrylic modified silicone adhesives, urethane adhesives, vinyl acetate adhesives, epoxy modified silicone adhesives, and styrene butadiene rubber adhesives. In the present embodiment, the second adhesive is a modified silicone adhesive compatible to hard-to-adhere materials. In the present invention, it is preferable that the second adhesive includes a modified silicone resin (silicone modified polymer). The above-listed epoxy modified silicone adhesives include epoxy adhesives in which a silicone modified polymer is used as a curing agent. Examples of the above-described modified silicone adhesive compatible to hard-to-adhere materials include modified silicone adhesives containing a silyl group-containing polymer as a main component.

On the inner peripheral surface 33b of the second end portion 31 of the cap 3, a third layer L3 of a third adhesive is further formed. Preferably, the third layer L3 is formed at a position closer to the center in the axial direction than the end face is and closer to the end in the axial direction than the grooves 330 are. The third layer L3 is an element for enhancing sealing between the potting agent 5 to be described below and the inner peripheral surface 33b, and is formed before the hollow fiber membrane bundle 4 is housed in the module case. Note here that, for the sake of convenience in illustration, the thickness of the third layer L3 in the radial direction is exaggerated in the drawings, and it is not necessarily to scale.

The third adhesive has an affinity for hard-to-adhere materials and has a higher elasticity than the potting agent 5 to be described below. Examples of the third adhesive are the same as those given above for the second adhesive. Thus, description on specific examples of the third adhesive is omitted. In the present embodiment, the third adhesive is the same modified silicone adhesive as the second adhesive. The third layer L3 absorbs the load applied to the module 1 by the pressure of a fluid and the like, whereby the potting agent 5 is prevented from flaking off from the inner peripheral surface 33b of the cap 3.

The hardnesses of the second adhesive and the third adhesive after curing may each be A80 or less, preferably A10 to A80, and more preferably A10 to A40 in terms of durometer hardness as specified in JIS K 6253-3: 2012.

2. Filter Module

The module case of the present embodiment houses the hollow fiber membrane bundle 4 made up of a large number of hollow fiber membranes bundled up together. Each hollow fiber membrane constituting the hollow fiber membrane bundle 4 has a hollow structure with a through-hole passing therethrough in the longitudinal direction and also has numerous pores inside. The diameter of the pores may be set as appropriate according to the diameter of molecules intended to be separated from a fluid. The hollow fiber membrane may be any of a microfiltration membrane, an ultrafiltration membrane, and a nanofiltration membrane. In the present embodiment, a fluid that has flowed into the module 1 through the primary side port (one of the passages S2) flows into the through-holes (hollow portions) extending in the longitudinal direction in the respective hollow fiber membranes constituting the hollow fiber membrane bundle 4. Of molecules contained in the fluid that has flowed into the hollow portions, those small enough to pass through the pores pass through the hollow fiber membranes by flowing out from the hollow portions through the pores and are then discharged from the passages S1 serving as the secondary side ports to the outside of the module 1. Molecules that have not passed through the pores of the hollow fiber membranes are discharged to the outside of the module 1 from the passage S2 serving as the secondary side port.

Examples of the material of the hollow fiber membranes include polyethylene, polypropylene, polytetrafluoroethylene, polyvinylidene fluoride, polyethersulfone, polysulfone, polyarylate, polyetheretherketone, polyphenylene sulfide, polyvinyl chloride, polyester, cellulose acetate, cellulose, polyamide, polyamide-imide, polyimide, and polyetherimide. Of these materials, polyethylene, polypropylene, polytetrafluoroethylene, polyetheretherketone, polyphenylene sulfide, polyester, cellulose, polyamide, and polyimide are preferable from the viewpoint of their higher resistance to organic solvents. From the viewpoint of reducing the cut-off molecular weight, polyamide is preferable. One type of polyamide may be used, or a mixture or copolymer of two or more types of polyamide may be used. Examples of the polyamide include polyamide 4, polyamide 46, polyamide 6, polyamide 66, polyamide 610, polyamide 10, polyamide 11, polyamide 12, polyamide 612, polyamide MXD6, polyamide 4T, polyamide 6T, polyamide 9T, and polyamide 10T.

The size of each hollow fiber membrane is not limited to a particular size as long as the effects of the invention are not impaired. The outer diameter of the hollow fiber membrane is preferably 300 μm to 2000 μm and more preferably 400 μm to 1500 μm. The inner diameter of the hollow fiber membrane is preferably 100 μm to 1500 μm and more preferably 200 μm to 1000 μm. The cut-off molecular weight of the hollow fiber membrane is, for example, 200 to 200000 and more preferably 200 to 20000. In the present invention, the cut-off molecular weight is measured using a method specified in JP 2016-193430A. The hollow fiber membrane preferably exhibits a weight change ratio of 10 mass% or less when subjected to propylene glycol monomethyl ether acetate (PGMEA) and more preferably exhibits a weight change ratio of 10 mass% or less when subjected to PGMEA and also when subjected to toluene, as with the material of the casing 2. The packing density of the hollow fiber membranes housed in the module case is not limited to particular values. The ratio of the volume of the hollow fiber membranes including the volume of the hollow portions to the volume of the interior of the module case is 30 vol% to 90 vol%, preferably 35 vol% to 75 vol%, and more preferably 40 vol% to 65 vol%.

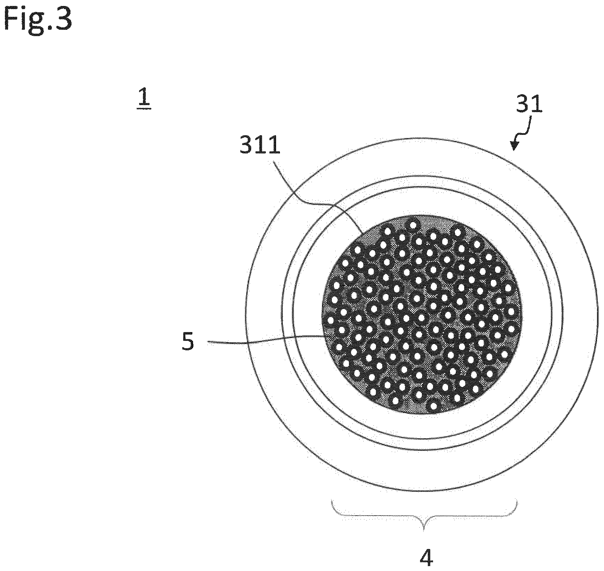

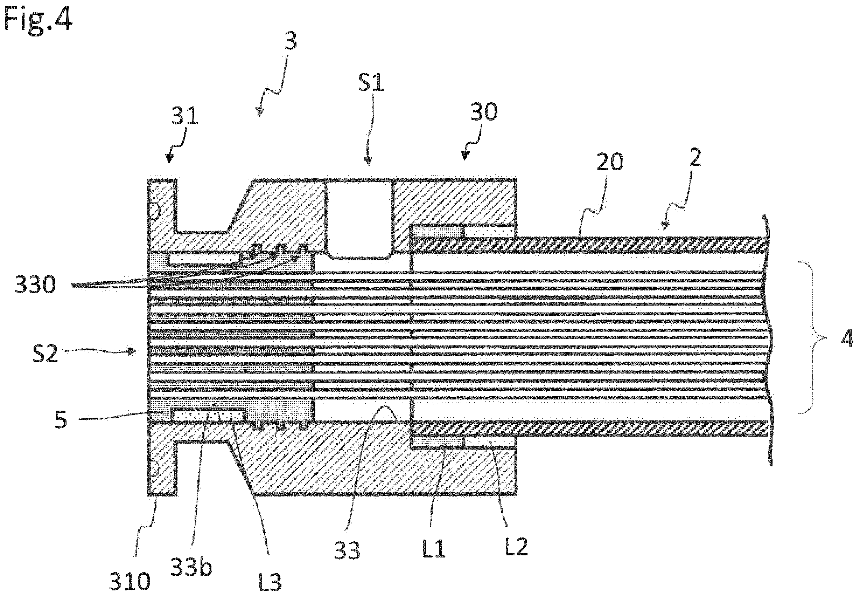

FIG. 3 is an end view of the module 1, and FIG. 4 is a fragmentary sectional view of the module 1. The hollow fiber membranes constituting the hollow fiber membrane bundle 4 of the present embodiment are aligned such that their both end faces are aligned with the both end faces of the module case. Thus, as shown in FIG. 3, at the end face of the second end portion 31 of the cap 3, the end faces of the hollow fiber membranes can be seen through the opening of the passage S2 (note here that FIG. 3 does not show the exact number of hollow fiber membranes actually housed in the module). In the present embodiment, the end portions of the respective hollow fiber membranes are not closed, and the through-holes extending in the longitudinal direction are in communication with the external space via the openings of the passages S2.

Gaps between the end portions of the respective hollow fiber membranes and the inner peripheral surface 33b of the second end portion 31 are filled with the potting agent 5. The potting agent 5 is placed so as to extend from each end face of the respective hollow fiber membranes to a position closer to the end in the axial direction than the passage S1 is, thereby binding each end portion of the respective hollow fiber membranes and also sealing a gap between the hollow fiber membrane bundle 4 and the inner peripheral surface 33b to separate a fluid before being subjected to separation and a fluid after being subjected to separation. Meanwhile, the potting agent 5 does not close the end portions of the respective hollow fiber membranes.

The potting agent 5 is made of a resin material with organic solvent resistance. The material of the potting agent 5 may be, for example, a material selected from the group consisting of polyamide, polyethylene, polypropylene, phenol resins, polyimide, polyurea resins, epoxy resins, and silicone resins. Preferably, the material of the potting agent 5 is a material selected from the group consisting of polyamide, polyethylene, epoxy resins, and silicone resins. One of these materials may be used alone, or two or more of them may be used in combination. The potting agent 5 of the present embodiment uses, as a main component, the same epoxy resin as the main component used in the first adhesive. However, the main component of the potting agent 5 may be different from that of the first adhesive.

Examples of the material of the curing agent of the potting agent 5 are the same as those given above for the curing agent of the first adhesive. Thus, description on specific examples of the curing agent of the potting agent 5 is omitted. The potting agent 5 of the present embodiment uses, as the curing agent, the same aromatic polyamine as the curing agent used in the first adhesive. However, the curing agent of the potting agent 5 may be different from the curing agent of the first adhesive.

When polyethylene is used as the potting agent 5, the polyethylene may be a low viscosity polyethylene (LDPE) with a molecular weight of 5000 to 200000, preferably LDPE with a molecular weight of 10000 to 150000, and more preferably LDPE with a molecular weight of 30000 to 100000. When polyethylene is used as the potting agent 5, the adhesion between the hollow fiber membranes and the inner peripheral surface 33b can be further enhanced by dipping the hollow fiber membranes in a low viscosity polyolefin emulsion as a pretreatment for a potting treatment.

The hardness of the potting agent 5 after curing may be A70 or more and preferably D40 or more in terms of durometer hardness as specified in JIS K 6253-3: 2012. The potting agent 5 preferably exhibits a weight change ratio of 10 mass% or less when subjected to propylene glycol monomethyl ether acetate (PGMEA) and more preferably exhibits a weight change ratio of 10 mass% or less when subjected to PGMEA and also when subjected to toluene, as with the resin material of the casing 2.

Since the potting agent 5 has organic solvent resistance, it can be suitably used to provide sealing against fluids containing an organic solvent. However, in many cases, resins that can be used as the potting agent 5 have relatively high hardness, as with the first adhesive. Further, the resin materials that can be used as the material of the casing 2 and the cap 3 are often hard-to-adhere resin materials. Thus, in order to improve sealing between the potting agent 5 and the cap 3, the third layer L3 of the third adhesive is formed on the inner peripheral surface 33b before the potting treatment. The potting agent 5 preferably covers the third layer L3 from the inner side in the radial direction at least on the primary side port side in order to prevent the contact between the third layer L3 and a fluid before being subjected to separation.


3. Production Method of Filter Module


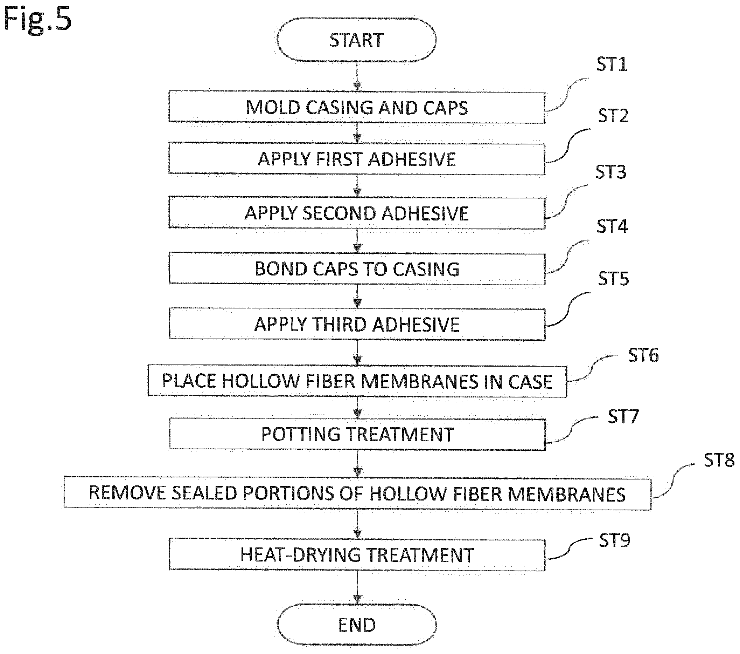

A method for producing the module 1 of the present embodiment will be described below. FIG. 5 is a flowchart illustrating the flow of a method for producing the filter module 1. In the first step ST1, a resin material that is resistant to a solvent to be subjected to a separation treatment is molded into the casing 2 and the caps 3. The casing 2 and the caps 3 can be molded using a known method such as extrusion molding or injection molding.

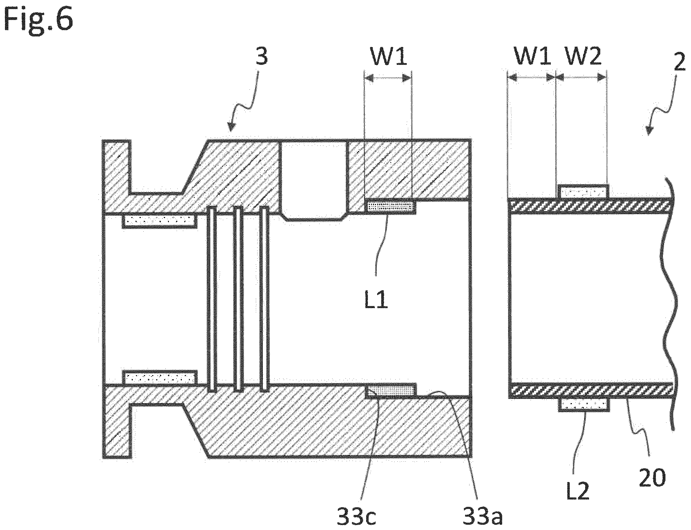

In the second step ST2, in order to form the first layer LI, the first adhesive is applied in a width W1 to at least one of the outer peripheral surface 20 of the casing 2 and the inner peripheral surface 33a of the cap 3. From the viewpoint of further reducing the risk that the first adhesive and the second adhesive may be mixed with each other, it is preferable to apply the first adhesive to the inner peripheral surface 33a of the cap 3 and not to apply the first adhesive to the outer peripheral surface 20 of the casing 2. More specifically, as shown in FIG. 6, it is preferable to partially apply the first adhesive to the inner peripheral surface 33a in such a manner that the first layer L1 with the width W1 extends from the surface 33c toward the first end portion 30 and not to apply the first adhesive to a portion of the inner peripheral surface 33a that would subsequently face the second adhesive applied to the outer peripheral surface 20 of the casing 2. However, the first adhesive may be applied to both the casing 2 and the cap 3. In this case, positions to which the first adhesive is to be applied may be such positions that, when the cap 3 is attached to the end portion of the casing 2 in a subsequent step ST4, the positions of the first adhesive applied to the casing 2 and the cap 3 in the axial direction coincide with each other. Note here that, for the sake of convenience in illustration, the thickness of the first layer L1 formed of the first adhesive and the thickness of the second layer L2 formed of the second adhesive are exaggerated in FIG. 6.

In the third step ST3, in order to form the second layer L2, the second adhesive is applied in a width W2 to at least one of the outer peripheral surface 20 of the casing 2 and the inner peripheral surface 33a of the cap 3. From the viewpoint of further reducing the risk that the first adhesive and the second adhesive may be mixed with each other, it is preferable to apply the second adhesive to the outer peripheral surface 20 of the casing 2 and not to apply the second adhesive to the inner peripheral surface 33a of the cap 3. More specifically, as shown in FIG. 6, it is preferable to partially apply the second adhesive to the outer peripheral surface 20 such that, from a position spaced apart from the end of the casing 2 by the width W1 toward the center in the axial direction, the second layer L2 extends toward the center in the axial direction by the width W2. However, the second adhesive may be applied to both the casing 2 and the cap 3. In this case, positions to which the second adhesive is to be applied may be such positions that, when the cap 3 is attached to the end portion of the casing 2 in the subsequent step ST4, the positions of the second adhesive applied to the casing 2 and the cap 3 in the axial direction coincide with each other. The second adhesive may partially overlap the first adhesive on the outer peripheral surface 20 of the casing 2 and the inner peripheral surface 33a of the cap 3.

In the fourth step ST4, the caps 3 are attached to the respective end portions of the casing 2, and the casing 2 and the caps 3 are bonded and fixed sufficiently. In the present embodiment, the cap 3 is attached to the casing 2 after being positioned such that the end face of the casing 2 abuts against the surface 33c of the cap 3.

In the fifth step ST5, the third adhesive is applied to the inner peripheral surface 33b of the cap 3. In the present embodiment, the position in the axial direction at which the third adhesive is applied is closer to the center in the axial direction than the end face of the second end portion 31 is and closer to the end in the axial direction than the grooves 330 are. The third adhesive preferably does not stick out to the outside of the module case from the passage S2 to prevent the contact between the third adhesive and a flowing liquid.

In the sixth step ST6, a plurality of hollow fiber membranes are housed in the module case via the passage S2, and both end portions of the plurality of hollow fiber membranes are fixed together through thermocompression sealing, and the through-holes are sealed. At this time, the hollow fiber membranes have a length such that, when the hollow fiber membranes are housed in the module case, the both ends thereof extend outward from the openings of the passages S2 at the both ends of the module case, and the portions extending outward from the module case are subjected to thermocompression sealing.

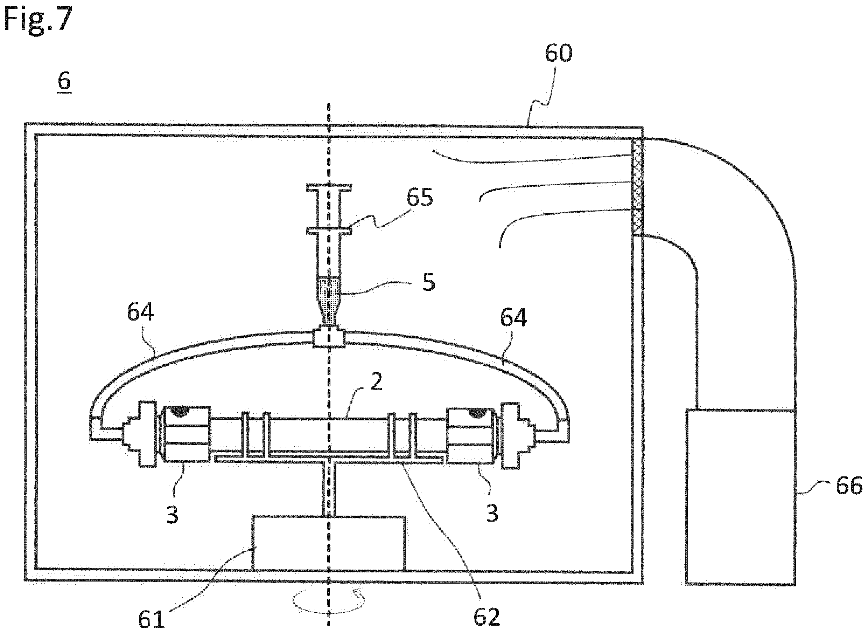

In the seventh step ST7, a potting treatment is performed using the potting agent 5. The method of the potting treatment is not limited to particular methods. The potting treatment may be performed by centrifugal potting using, for example, a device 6 as shown in FIG. 7. The device 6 includes, in a space defined by a housing 60, a rotary driving device 61 and a rotating base 62 rotated by torque transmitted from the rotary driving device 61. The module case that houses the hollow fiber membranes is placed on the rotating base 62 with the position of its center of gravity aligned with the central axis of rotation of the rotating base 62 and is fixed to the rotating base 62 with a fixture 63. After the module case is fixed on the rotating base 62, the second end portions 31 of the caps 3 at the both ends of the module case are connected to tubes 64 in such a manner that the passages S2 on both sides and the tubes 64 are in liquid-tight communication with each other. The tubes 64 are connected to the tip of a syringe 65 containing a predetermined amount of the potting agent 5 in the liquid form on the central axis of rotation of the rotating base 62. When the rotary driving device 61 is rotated, the potting agent 5 in the syringe 65 flows through the tubes 64 to enter the caps 3 via the openings of the passages S2 on the both sides of the module case, and fills gaps between the respective hollow fiber membranes and between the hollow fiber membranes and the inner peripheral surface 33b. The rotary driving device 61 is rotated continuously at a predetermined rotational speed for a predetermined period.

When performing the centrifugal potting treatment, it is preferable to circulate hot air from a hot air dryer 66 in the housing 60 in order to heat the housing in advance.

In the eighth step ST8, the module 1 is taken out from the device 6, and the portions of the hollow fiber membranes subjected to thermocompression sealing are cut off together with the portions of the hollow fiber membranes having the cured potting agent 5, thereby allowing the through-holes of the hollow fiber membranes to be in communication with the external space on the end faces of the second end portions 31 of the caps 3.

When the main component of the potting agent 5 is an epoxy resin, the module 1 may be heat-dried in the ninth step ST9. This accelerates crosslinking of the epoxy resin, whereby the organic solvent resistance of the potting agent 5 is further improved.

4. Characteristics

According to the module 1 of the above embodiment, the first adhesive provides sealing resistant to organic solvents and the second adhesive more reliably fixes the casing 2 and the caps 3 both made of a hard-to-adhere material, and absorbs the load applied on the module case. With this configuration, the casing 2, the caps 3, and the hollow fiber membrane bundle 4 each may be made of a resin material, and it becomes possible to provide a filter module that is resistant to organic solvents at a relatively low cost.

The module 1 of the above embodiment eliminates the necessity of providing members for sealing between the casing 2 and the caps 3 as separate components. Accordingly, it is possible to provide a filter module having a simple configuration with a small number of components.

According to the module 1 of the above embodiment, at least one of the casing 2 and the caps 3 may be made of a transparent material. This allows the interior of the module 1 to be visible, and even if clogging of the filter or any other trouble occurs, it is possible to note the occurrence of the trouble and identify the location of the trouble.

5. Modified Examples

Although the embodiment of the present invention has been described above, the present invention is not limited to the above embodiment, and various modifications can be made without departing from the spirit and scope of the present invention. For example, the following modifications can be made. Essential features of the following modified examples may be combined as appropriate.

In the module 1 of the above embodiment, the hollow fiber membrane bundle 4 is used as a filter. However, the filter is not limited thereto and may be a known filter. For example, a sheet-type membrane filter or a mesh-type metal filter may be used.

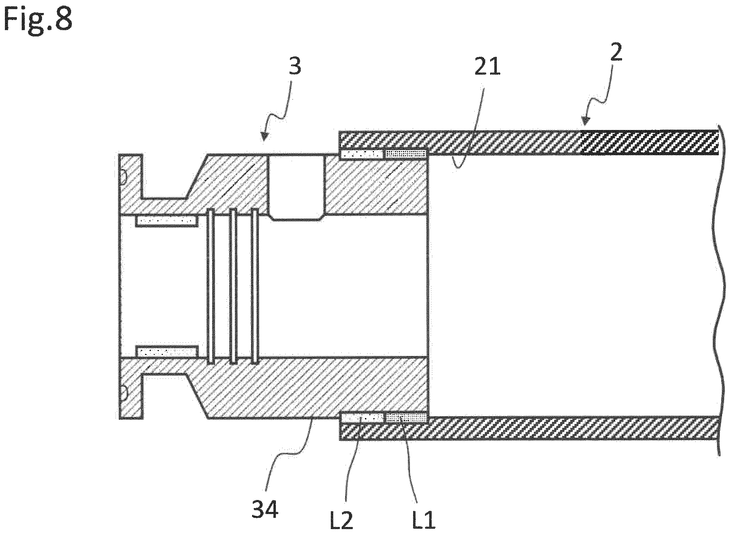

In the module 1 of the above embodiment, the inner peripheral surface 33a of the cap 3 covers the outer peripheral surface 20 of the casing 2 from the outer side in the radial direction. However, the positional relationship between them may be reversed as shown in FIG. 8. That is, the cap 3 may be fixed to the casing 2 in such a manner that an inner peripheral surface 21 of the casing 2 covers an outer peripheral surface 34 of the cap 3 from the outer side in the radial direction. In this configuration, the positional relationship between the first layer L1 and the second layer L2 in the axial direction also may be reversed. That is, the second layer L2 may be arranged closer to the outside in the axial direction and the first layer L1 may be arranged closer to the center in the axial direction.

In the module 1 of the above embodiment, the passage S1 extending in the radial direction is formed in the cap 3. However, the passage S1 need not be formed in the cap 3 and may be formed on a side peripheral surface of the casing 2. The number of passages S1 is not limited to two, and may be one or may be three or more.

The module 1 of the above embodiment is a cross flow filtration module in which the passages S2 are provided at the both ends and the hollow fiber membranes are open at their both ends. However, the module 1 may be a dead-end filtration module in which one end of the module case is closed and one of the passages S2 is omitted. In this case, the hollow fiber membranes constituting the hollow fiber membrane bundle 4 may be folded into a U-shape on the closed side of the module case and housed in the module case in such a manner that the both end portions of the hollow fiber membrane bundle 4 are located at the opening of the passage S2. Further, the hollow fiber membranes constituting the hollow fiber membrane bundle 4 may be configured such that ends of their through-holes on one side are sealed through thermocompression sealing, and may be housed in the module case in such a manner that the sealed ends thereof are located in the end portion on the closed side of the module case.

The method of the potting treatment is not limited to the one used in the above embodiment. For example, when a thermoplastic resin such as polyethylene is used as the potting agent 5, the potting treatment may be performed by injecting the thermoplastic resin melted by heating into gaps between the end portion of the hollow fiber membranes bundled up together and the inner peripheral surface 33b of the cap 3 and then causing thermal curing and natural curing of the thermoplastic resin.

The means for connecting the second end portion 31 of the cap 3 to a separation treatment line need not be a ferrule. The second end portion 31 may have various joint geometries according to the form of the separation treatment line in which the module 1 is to be installed. The caps 3 at the both ends need not necessarily have the same joint geometry, and they may have joint geometries different from each other.

Although the casing 2 of the above embodiment has a cylindrical shape, the casing 2 may have a rectangular cylindrical shape.

In the above embodiment, the annular grooves 330 are formed on the inner peripheral surface 33b of the cap 3 to make the inner peripheral surface 33b uneven in order to improve the adhesion of the potting agent 5. However, unevenness may be provided by forming annular ribs or providing a combination of a groove and a rib, instead of forming the grooves 330. Further, the shape of the element that provides unevenness to the surface is not limited to an annular shape, and may be changed as appropriate.

Although the casing 2 and the caps 3 of the above embodiment are made of a resin material, at least one of the casing 2 and the caps 3 may be made of a metal. Examples of the metal include stainless steel (SUS).

The order of the second step ST2 and the third step ST3 may be reversed. Specifically, the second adhesive may be applied to at least one of the casing 2 and the caps 3, and thereafter, the first adhesive may be applied to at least one of the casing 2 and the caps 3.

Examples

The present invention will be described in detail below with reference to examples and comparative examples. It is to be noted, however, that the present invention is not limited to the following examples.

As described below, four types of module cases different from each other in the manner of bonding a casing and caps were prepared, and they were used as the module cases of Examples 1 and 2 and Comparative Examples 1 and 2, respectively. In Experiment 1, identical hollow fiber membrane bundles were housed in the respective module cases. The module cases were then subjected to a potting treatment to produce modules according to Examples 1 and 2 and Comparative Examples 1 and 2. Thereafter, a flowing liquid was passed through each module to evaluate the durability of the module. In Experiment 2, the pressure resistance of each module case was tested.

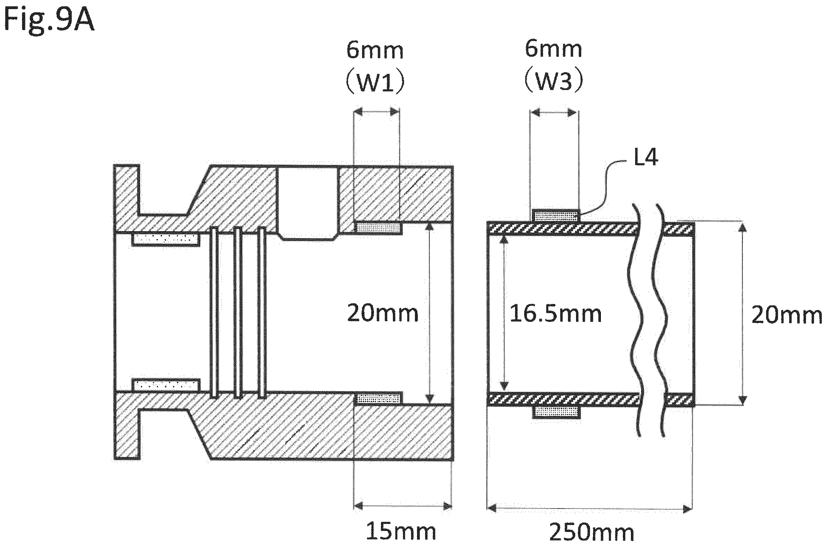

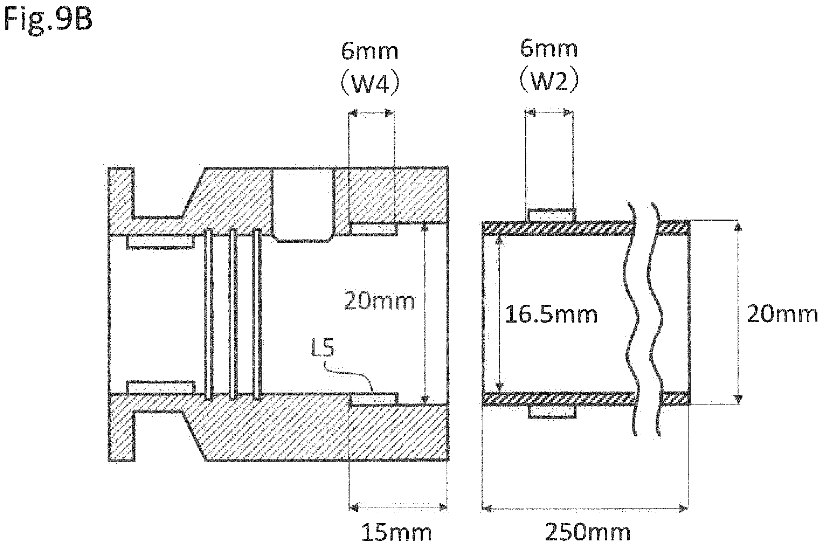

The configurations of the casing and the caps were common among the module cases of Examples 1 and 2 and Comparative Examples 1 and 2. The casing had an inner diameter of 16.5 mm, an outer diameter of 20 mm, and a length of 250 mm (see FIG. 9). The inner diameter of a first end portion of the cap was 20 mm, and the length in the axial direction of the inner peripheral surface of the first end portion was 15 mm (see FIG. 9). The casing and the caps were both molded from polyamide 6 (UNITIKA LTD., A1030BRT, relative viscosity: 3.53). The casing was molded by extrusion molding, and the caps were molded by injection molding. The weight change ratio of the material of the casing and the caps when subjected to propylene glycol monomethyl ether acetate (PGMEA) and the weight change ratio of the same when subjected to toluene were both 10 mass% or less. The total light transmittance of the casing was 74%.

A first adhesive used in Examples 1 and 2 and Comparative Example 1 was an epoxy resin adhesive with organic solvent resistance (Mitsubishi Chemical Corporation, main component: JER604, curing agent: aromatic polyamine curing agent, ANCAMINE LV manufactured by Evonik Industries AG). The hardness of the first adhesive after curing was A90 or more in terms of durometer hardness as specified in JIS K 6253-3: 2012. The weight change ratio of the first adhesive when subjected to propylene glycol monomethyl ether acetate (PGMEA) and the weight change ratio of the same when subjected to toluene were both 10 mass% or less.

A second adhesive used in Example 1 was an adhesive for hard-to-adhere materials (EP001K manufactured by Cemedine Co., Ltd., an epoxy adhesive in which a silicone-modified polymer is used as a curing agent). The hardness of the second adhesive after curing was A72 in terms of durometer hardness as specified in JIS K 6253-3: 2012. In Example 1, as shown in FIG. 6, the first adhesive was partially applied to the inner peripheral surfaces of the first end portions of the caps, and the second adhesive was partially applied to the outer peripheral surface of the casing. The width W1 and the width W2 were each set to 6 mm. After the first adhesive and the second adhesive were applied, the caps were attached to the casing in the state where these adhesives were cured enough not to cause dripping, whereby the caps and the casing were bonded together.

A second adhesive used in Example 2 was a modified silicone adhesive for hard-to-adhere materials (ThreeBond TB1533F manufactured by ThreeBond Holdings Co., Ltd.). The hardness of the second adhesive after curing was A25 in terms of durometer hardness as specified in JIS K 6253-3: 2012. In Example 2, as shown in FIG. 6, the first adhesive was partially applied to the inner peripheral surfaces of the first end portions of the caps, and the second adhesive was partially applied to the outer peripheral surface of the casing. The width W1 and the width W2 were each set to 6 mm. After the first adhesive and the second adhesive were applied, the caps were attached to the casing in the state where these adhesives were cured enough not to cause dripping, whereby the caps and the casing were bonded together.

In Comparative Example 1, a second adhesive was not used, and the first adhesive was applied in the same manner as in Examples 1 and 2. The first adhesive was also applied to portions where the second adhesive was applied in Examples 1 and 2. Specifically, as shown in FIG. 9A, the first adhesive was applied not only to the inner peripheral surfaces of the caps but also to the outer peripheral surface of the casing to form a layer L4 of the first adhesive. The width W1, and the width W3 of the layer L4 were each set to 6 mm. Note here that, for the sake of convenience in illustration, the thickness of the first adhesive is exaggerated in FIG. 9A. After the first adhesive were applied to the caps and the casing, the caps were attached to the casing in the state where the first adhesive was cured enough not to cause dripping, whereby the caps and the casing were bonded together.

In Comparative Example 2, a first adhesive was not used, and the same second adhesive as used in Example 1 was applied in the same manner as in Example 1. The second adhesive was also applied to portions where the first adhesive was applied in Examples 1 and 2. Specifically, as shown in FIG. 9B, the second adhesive was applied not only to the outer peripheral surface of the casing but also to the inner peripheral surfaces of the caps to form a layer L5 of the second adhesive. The width W2, and the width W4 of the layer L5 were each set to 6 mm. Note here that, for the sake of convenience in illustration, the thickness of the second adhesive is exaggerated in FIG. 9B. After the second adhesive were applied to the caps and the casing, the caps were attached to the casing in the state where the second adhesive was cured enough not to cause dripping, whereby the caps and the casing were bonded together.

Experiment 1

Two hundreds hollow fiber membranes made of polyamide 6 were housed in each of the module cases of Examples 1 and 2 and Comparative Examples 1 and 2. The hollow fiber membranes each have an inner diameter of 500 $\mu$m, an outer diameter of 800 $\mu$m, and a length of 300 mm. The hollow fiber membranes had a cut-off molecular weight (Mw) of about 10000 and a weight change ratio of 10 mass% or less when subjected to propylene glycol monomethyl ether acetate (PGMEA) and also when subjected to toluene. The potting treatment of the module case housing the hollow fiber membranes was performed by centrifugal potting as in the above embodiment. A potting agent used in Experiment 1 was the same resin as the first adhesive in Examples 1 and 2 and Comparative Example 1, namely, the epoxy resin adhesive with organic solvent resistance (Mitsubishi Chemical Corporation, main component: JER604, curing agent: aromatic polyamine curing agent, ANCAMINE LV manufactured by Evonik Industries AG). Each of the modules according to Examples 1 and 2 and Comparative Examples 1 and 2 was set in the device 6 shown in FIG. 7, and the module was rotated for 30 minutes in the housing 60 heated in advance by circulating hot air at 70°C. Thereafter, the module was taken out from the housing 60, and the potted portions of the hollow fiber membrane bundle extending outward from the both ends of the module were cut off, thereby allowing the through-holes of the hollow fiber membranes to be in communication with the outside of the module. The module was then heat-dried for 8 hours.

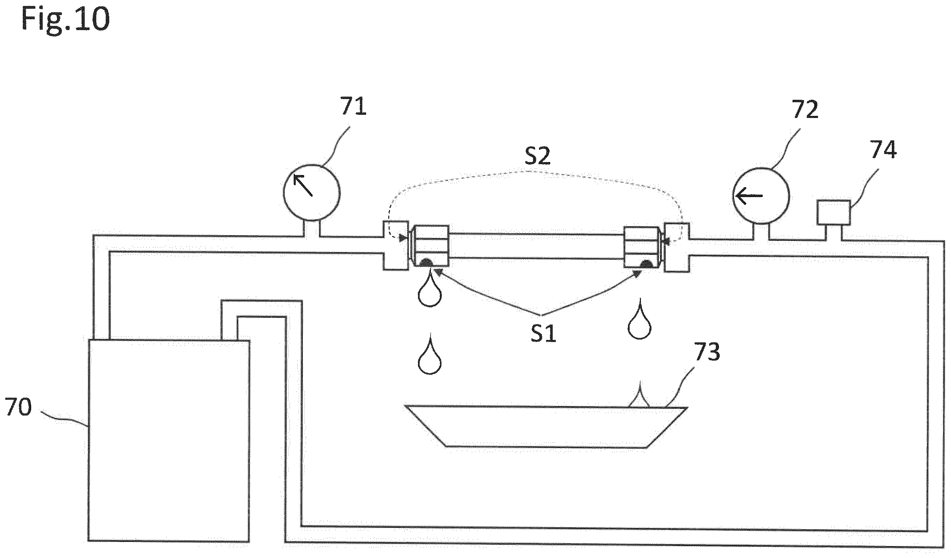

Each of the modules of Examples 1 and 2 and Comparative Examples 1 and 2 was connected to an internal pressure type separation treatment line shown in FIG. 10. A flowing liquid was continuously passed through the module using a liquid feed circulation pump 70, and the change in permeability of the module in a predetermined period was observed. In each module, a passage S2 connected to a primary side pressure gauge 71 was used as a primary side port, passages S1 and a passage S2 connected to a secondary side pressure gauge 72 were used as secondary side ports, and the pressure measured by the primary side pressure gauge 71 and the pressure measured by the secondary side pressure gauge 72 were adjusted by a pressure regulating valve 74. Of the liquid passing through the module, liquid that had passed through pores of the hollow fiber membranes flowed out through the passage S1 as permeate liquid separated from the flowing liquid, and the remaining liquid was recirculated in the separation treatment line through the passage S2 on the secondary side. After each predetermined period shown in Table 1 had elapsed, the permeate liquid that had flowed out through the passages S1 was collected in a saucer 73. The mass of the collected permeate liquid was measured as the mass W (kg) of the permeate liquid, and the amount of permeate liquid per hour (kg/(m$^2$·bar·h)) was calculated as per the following equation.

$$\text{Amount of permeate liquid (kg/(m}^2\cdot\text{bar}\cdot\text{h})) = W/(A \times p \times T)$$

In the above equation, A (m$^2$) is the effective filtration area of the hollow fiber membrane bundle, p (bar) is the arithmetic average of the value (bar) indicated by the primary pressure gauge 71 and the value (bar) indicated by the secondary pressure gauge 72, and T (h) represents the elapsed time from the start of the separation treatment.

1% cellulose acetate (Mw 12000) ethyl acetate solution was used as the flowing liquid, and p was 3 bar.

Results of Experiment 1

The results are shown in Table 1. In Table 1, "I", "II", and "-" are as follows. I: The amount of permeate liquid remained the same or approximately the same as the previously measured value.

II: The amount of permeate liquid greatly changed from the previously measured value. -: The amount of permeate liquid became unmeasurable.

[Table 1]

|  | 4 hours later | 24 hours later | 3 days later | 1 week later | 1 month later | 2 months later |
|---|---|---|---|---|---|---|
| Ex. 1 | I | I | I | I | I | II |
| Ex. 2 | I | I | I | I | I | I |
| Comp. Ex. 1 | I | I | I | II | - | - |
| Comp. Ex. 2 | I | I | II | - | - | - |

In the modules according to Examples 1 and 2, the amount of permeate liquid was stable even after a lapse of one week. These results demonstrate that the modules of Examples 1 and 2 withstand long-term use under a pressure of 3 bar.

In the module according to Comparative Example 1, the amount of permeate liquid greatly changed after a lapse of one week. After one month had elapsed, the adhesion between the casing and the caps was released, and the amount of permeate liquid became unmeasurable owing to the occurrence of leakage.

In the module according to Comparative Example 2, the amount of permeate liquid greatly changed after a lapse of 3 days. After one week had elapsed, the adhesives used therein were affected by the flowing liquid, and the amount of permeate fluid became unmeasurable owing to the occurrence of leakage.

Experiment 2

Each of the module cases of Examples 1 and 2 and Comparative Examples 1 and 2 was connected to the internal pressure type separation treatment line shown in FIG. 10, and pure water was continuously passed through the module case using the liquid feed circulation pump 70. After the module case had been filled with pure water, the two passages S1 were sealed, and the resistance of the module case at each predetermined pressure (bar) shown in Table 2 was observed. In each module case, the pressure measured by the primary side pressure gauge 71 and the pressure measured by the secondary side pressure gauge 72 were controlled by the pressure regulating valve 74 to maintain the predetermined pressure for 1 hour, and whether water leaked from the bonded portions between the casing and the caps was observed. Of the pressures at which water leakage had not occurred in 1 hour, the maximum pressure was evaluated as the pressure that the module case could withstand. The predetermined pressure (bar) was the arithmetic average of the value measured by the primary side pressure gauge 71 and the value measured by the secondary side pressure gauge 72.

The results are shown in Table 2. In Table 2, "I", "II", and "-" are as follows. I: Water did not leak from the bonded portions. II: Water leaked from the bonded portions. -: The predetermined pressure could not be maintained.

[Table 2]

|  | 1 bar | 5 bar | 8 bar | 15 bar | 20 bar | 22 bar |
|---|---|---|---|---|---|---|
| Ex. 1 | I | I | I | I | I | II |
| Ex. 2 | I | I | I | I | I | I |
| Comp. Ex. 1 | I | I | I | II | - | - |

(continued)

|  | 1 bar | 5 bar | 8 bar | 15 bar | 20 bar | 22 bar |
|---|---|---|---|---|---|---|
| Comp. Ex. 2 | I | I | I | I | I | I |

It was found that the module case according to Example 1 could withstand the use at a pressure of 20 bar. However, water leaked from the bonded portions between the casing and the caps at a pressure of 22 bar.

It was found that the module case according to Example 2 could withstand the use under a pressure of 22 bar.

In the module case according to Comparative Example 1, water leaked from the bonded portions between the casing and the caps at a pressure of 15 bar. At a pressure of 20 bar, the adhesion between the casing and the cap was released, whereby the predetermined pressure could no longer be maintained.

It was found that the module case according to Comparative Example 2 could withstand the use under a pressure of 22 bar. This indicates that the second adhesive exhibits strong adhesion to hard-to-adhere materials under the condition where the second adhesive was not affected by solvents.

The results of Experiment 2 described above demonstrate that, in the module cases according to Examples 1 and 2, the adhesion strength of the first adhesive was reinforced by the second adhesive.

List of Reference Numerals

1    Filter module
2    Casing
3    Cap
4    Filter (hollow fiber membrane bundle)
5    Potting agent
20   Outer peripheral surface
21   Inner peripheral surface
30   First end portion
31   Second end portion
L1   First layer
L2   Second layer
L3   Third layer
S1   Passage
S2   Passage

**Claims**

1.  A filter module case comprising:

a casing having a substantially cylindrical shape that extends in an axial direction;
a cap having a substantially cylindrical shape and including an inner wall surface that defines a passage providing communication between an inside and an outside of the casing and extending in the axial direction and a first end portion that receives an end portion of the casing in the passage and is bonded and fixed to the end portion of the casing;
a first layer arranged at a position closer to an end in the axial direction and facing an outer peripheral surface of the end portion of the casing and the inner wall surface of the first end portion; and
a second layer arranged at a position closer to the center in the axial direction than the first layer is and facing the outer peripheral surface of the end portion of the casing and the inner wall surface of the first end portion,
wherein the casing and the cap are made of a material with organic solvent resistance,
the first layer is formed of a first adhesive with organic solvent resistance, and
the second layer is formed of a second adhesive that has an affinity for hard-to-adhere materials and has a higher elasticity than the first adhesive.

2.  A filter module case comprising:

a casing having a substantially cylindrical shape that extends in an axial direction;
a cap that having a substantially cylindrical shape and including an inner wall surface that defines a passage providing communication between an inside and an outside of the casing and extending in the axial direction and a first end portion that is received by an end portion of the casing and is bonded and fixed to the end portion of the casing;
a first layer arranged at a position closer to the center in the axial direction and facing an inner peripheral surface of the end portion of the casing and an outer peripheral surface of the first end portion; and
a second layer arranged at a position closer to an end in the axial direction than the first layer is and facing the inner peripheral surface of the end portion of the casing and the outer peripheral surface of the first end portion, wherein the casing and the cap are made of a material with organic solvent resistance,
the first layer is formed of a first adhesive with organic solvent resistance, and
the second layer is formed of a second adhesive that has an affinity for hard-to-adhere materials and has a higher elasticity than the first adhesive.

3. The filter module case according to claim 1 or 2,
wherein the material of the casing and the cap includes a material selected from the group consisting of polyamide, polyethylene, polypropylene, polyetheretherketone, polyphenylsulfone, polyphenylene sulfide, polytetrafluoroethylene, ethylene chlorotrifluoroethylene, and metals.

4. The filter module case according to any one of claims 1 to 3,
wherein the casing has a degree of transparency high enough to allow an interior of the casing to be visible from outside.

5. The filter module case according to any one of claims 1 to 4,
wherein the first adhesive includes a material selected from the group consisting of polyamide adhesives, polyethylene adhesives, polypropylene adhesives, phenol resin adhesives, polyimide adhesives, polyurea resin adhesives, epoxy resin adhesives, and silicone resin adhesives.

6. The filter module case according to any one of claims 1 to 5,
wherein the second adhesive is selected from the group consisting of silicone adhesives, modified silicone adhesives, acrylic modified silicone adhesives, urethane adhesives, vinyl acetate adhesives, epoxy modified silicone adhesives, and styrene butadiene rubber adhesives.

7. A filter module comprising:

the filter module case according to any one of claims 1 to 6; and
a filter housed in an internal space of the casing and a space that is defined by the inner wall surface of the cap, wherein the filter is made of a material with organic solvent resistance.

8. The filter module according to claim 7,

wherein the filter is a hollow fiber membrane bundle housed in the space with a longitudinal direction of the hollow fiber membrane bundle aligned with the axial direction of the casing,
the cap further includes a second end portion that is on an opposite side of the first end portion across the passage extending in the axial direction,
the second end portion defines an end opening of the passage, and
a through-hole extending in the longitudinal direction in each of hollow fiber membranes constituting the hollow fiber membrane bundle is in communication with an external space via the end opening.

9. The filter module according to claim 8, further comprising:

a potting agent that fills a gap between end portions of the respective hollow fiber membranes and the inner wall surface of the second end portion and fixes the hollow fiber membrane bundle to the cap in such a manner that an end face of the hollow fiber membrane bundle is generally aligned with an end face of the second end portion; and
a third layer arranged between the potting agent and the inner wall surface of the second end portion,
wherein the potting agent has organic solvent resistance, and
the third layer is formed of a third adhesive that has an affinity for hard-to-adhere materials and has a higher elasticity than the potting agent.

**10.** The filter module according to claim 9,
wherein a portion of the inner wall surface of the second end portion to abut against the potting agent is made uneven.

**11.** The filter module according to claim 9 or 10,
wherein the potting agent includes a material selected from the group consisting of polyamide, polyethylene, polypropylene, phenolic resins, polyimide, polyurea resins, epoxy resins, and silicone resins.

**12.** The filter module according to any one of claims 9 to 11,
wherein the third adhesive is selected from the group consisting of silicone adhesives, modified silicone adhesives, acrylic modified silicone adhesives, urethane adhesives, vinyl acetate adhesives, epoxy modified silicone adhesives, and styrene butadiene rubber adhesives.

**13.** The filter module according to any one of claims 8 to 12,
wherein the hollow fiber membranes are made of polyamide.

EP 4 052 780 A1

Fig.1

Fig.2

EP 4 052 780 A1

Fig.3

Fig.4

EP 4 052 780 A1

## Fig.5

```
              ┌─────────────┐
              │    START    │
              └──────┬──────┘
                     │
         ┌───────────▼───────────────┐  ST1
         │   MOLD CASING AND CAPS     │
         └───────────┬───────────────┘  ST2
                     │
         ┌───────────▼───────────────┐  ST3
         │    APPLY FIRST ADHESIVE    │
         └───────────┬───────────────┘
                     │
         ┌───────────▼───────────────┐  ST4
         │   APPLY SECOND ADHESIVE    │
         └───────────┬───────────────┘  ST5
                     │
         ┌───────────▼───────────────┐
         │     BOND CAPS TO CASING    │
         └───────────┬───────────────┘
                     │
         ┌───────────▼───────────────┐
         │     APPLY THIRD ADHESIVE   │
         └───────────┬───────────────┘
```

MOLD CASING AND CAPS — ST1

APPLY FIRST ADHESIVE — ST2

APPLY SECOND ADHESIVE — ST3

BOND CAPS TO CASING — ST4

APPLY THIRD ADHESIVE — ST5

PLACE HOLLOW FIBER MEMBRANES IN CASE — ST6

POTTING TREATMENT — ST7

REMOVE SEALED PORTIONS OF HOLLOW FIBER MEMBRANES — ST8

HEAT-DRYING TREATMENT — ST9

END

Fig.6

Fig.7

Fig.8

Fig.9A

6mm
（W1）

6mm
（W3）

L4

20mm

16.5mm

20mm

15mm

250mm

Fig.9B

6mm
（W4）

6mm
（W2）

20mm

L5

16.5mm

20mm

15mm

250mm

Fig.10

## INTERNATIONAL SEARCH REPORT

| International application No. |
| --- |
| PCT/JP2020/037652 |

### A. CLASSIFICATION OF SUBJECT MATTER

Int.Cl. B01D63/00(2006.01)i, B01D63/02(2006.01)i, B01D69/08(2006.01)i,
B01D71/56(2006.01)i, C09J201/00(2006.01)i
FI: B01D63/00500, B01D63/02, B01D71/56, B01D69/08, C09J201/00
According to International Patent Classification (IPC) or to both national classification and IPC

### B. FIELDS SEARCHED

Minimum documentation searched (classification system followed by classification symbols)
Int.Cl. B01D63/00-63/16, B01D69/08, B01D71/56, C09J201/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2017/171015 A1 (ASAHI KASEI MEDICAL CO., LTD.) 05 October 2017 (2017-10-05), paragraphs [0013]-[0031], fig. 1, 2 | 1–13 |
| A | JP 6-063368 A (NOK CORP.) 08 March 1994 (1994-03-08), paragraphs [0011]-[0018], fig. 2-4 | 1–13 |
| A | JP 61-157308 A (DAICEL CHEM IND LTD.) 17 July 1986 (1986-07-17), page 2, lower left column, line 5 to page 3, upper left column, line 14, fig. 1 | 1–13 |
| A | Microfilm of the specification and drawings annexed to the request of Japanese Utility Model Application No. 122671/1989 (Laid-open No. 060958/1991) (NIKKISO CO., LTD.) 14 June 1991 (1991-06-14), page 2, line 6 to page 3, line 9, fig. 3 | 1–13 |

☐ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 November 2020 | 17 November 2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/037652 |

```
WO 2017/171015 A1  05 October 2017    US 2019/0126204 A1
                                      fig. 1, 2, paragraphs [0032]-[0057]
                                      EP 3437723 A1
                                      CN 108712928 A
                                      TW 201735988 A

JP 6-063368 A      08 March 1994      (Family: none)

JP 61-157308 A     17 July 1986       (Family: none)

JP 3-060958 U1     14 June 1991       (Family: none)
```

Form PCT/ISA/210 (patent family annex) (January 2015)

**EP 4 052 780 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009202112 A
- JP 2016193430 A